# EUROPEAN PATENT SPECIFICATION

(11) **EP 1 307 779 B1**
(45) Date of publication and mention of the grant of the patent: **29.09.2004**
(21) Application number: 01965762.6
(22) Date of filing: 31.07.2001
(51) Int. Cl.: G02F 1/167

(54) **IMAGING SYSTEM**
ABBILDUNGSSYSTEM
SYSTEME DE FORMATION D'IMAGES

(30) Priority: 31.07.2000 NL 1015841
(43) Date of publication of application: 07.05.2003
(73) Proprietor: Stork Prints B.V., 5831 AT Boxmeer (NL)
(72) Inventor: DAM, Matheus, Adrianus, NL-9718 DJ Groningen (NL); KNAVEN, Martinus, Theodorus, Maria, NL-9743 HH Groningen (NL); SCHROTEN, Egbert, NL-9951 GR Winsum (NL); KETELAARS, Antonius, Adrianus, Josephus, NL-5302 XK Zaltbommel (NL)
(74) Representative: Prins, Adrianus Willem, Mr. Ir.
(86) International application number: PCT/NL2001/000585
(87) International publication number: WO 2002/010853

(56) References cited:
- WO-A-98/57226
- DE-A- 19 927 361

## Description

The invention relates to an imaging system, comprising a foil, which is manufactured from an electrically insulating foil material, the foil being provided with a plurality of channels of a first kind which are substantially perpendicular to a foil surface, in each channel of the first kind at least one electrophoretic medium of a first kind being included, a visual exterior of the electrophoretic medium of the first kind being dependent on an electric field applied over the electrophoretic medium of the first kind.

Such a system is known from DE 19927361 A1. The electrophoretic medium comprises a fluid in which charged or polar particles are included. These particles move through the fluid in the channel or change an orientation as a result of an electric field, applied over the electrophoretic medium. Through this displacement or change of orientation, a visual exterior of the electrophoretic medium is changeable. A predetermined image can be formed on the view side of the system by changing the visual exterior of the electrophoretic medium in channels selected to that end. In use, the system is therefore provided with electrodes located on the control side, each arranged to generate an individual electric field. In use, the system is also provided with an electrode disposed on the view side, which is foil-shaped and transparent and extends over the entire surface of the foil located on the view side. In such a situation, this electrode also often serves for sealing the channels so that the electrophoretic medium on the view side cannot flow out of the channels. For a good quality of the image to be observed, during use, on the view side, the channels are located as closely together as possible. Observed from the view side, preferably a largest possible part of the surface is occupied by the channels and a smallest possible part of the surface is occupied by foil material lying between the channels. This implies that relatively little foil surface is available for applying, for instance with the aid of glue; the sealing layer which ensures that the medium does not flow out of the channels. This hinders the application of the sealing layer. A layer once applied is susceptible to damage in the sense that adhesion of the layer to the foil takes place on very small surfaces and, therefore, does not form a reliable adhesion. As the view side is exposed to the free surroundings, the system can, on this side, easily be damaged during use. Accordingly, an additional drawback of such a system is that there is a relatively great risk that the layer applied on the view side, which is transparent, seals the channels, and often also functions as an electrode, detaches from the foil so that the electrophoretic systems on the view side will flow from the channels. In such a situation, the system is no longer repairable.

It is an object of the invention to provide an electrophoretic imaging system in which the risk of the electrophoretic medium flowing away by the withdrawal or detachment of the layer applied to the foil surface on the view side is minimal.

This object is achieved with the system according to the invention, which is characterized in that the foil material is optically transparent, each channel of the first kind extending from a foil surface of the foil located on a control side of the system opposite a view side of the system over a part of the thickness of the foil in the direction of a foil surface of the foil located on the view side of the system.

This offers the advantage that each channel of the first kind is only provided with an opening on the control side. In other words, in the direction of the view side; the channels are blind. As the foil material is optically transparent, the visual exterior of the electrophoretic medium in each channel can be observed from the view side. A transparent layer which is arranged to function as an electrode, can, moreover, be properly applied to the foil layer as much foil surface is available to have the layer adhere to the foil, for instance with the aid of glue. When such an electrode, provided on the foil surface located on the view side, detaches in one way or the other, the electrophoretic medium of the first kind will not be able to flow from the channels on the view side. The fact is that the channels are blind on the view side. The system can, if required, be repaired by simply applying a new, transparent electrode layer to the foil surface located on the view side.

An embodiment of the system according to the invention is characterized in that the foil is also provided with a plurality of channels of a second kind, each channel of the second kind extending from the foil surface of the foil located on the view side of the system over a part of the thickness of the foil in the direction of the foil surface of the foil located on the control side of the system, the channels of the first and the second kind being distributed in the foil layer such that, viewing in a direction parallel to the axial direction of the channels, at least a minimal distance is available between at least a part of channel wall, closed in itself, of each channel of the first kind and at least a part of the channel wall, closed in itself, of each channel of the second kind, a direct fluid communication between each channel of the first kind and each channel of the second kind being excluded.

This offers the advantage that there is a possibility to also include an electrophoretic medium in the channels of the second kind, which involves the possibility of a combination of a good quality of the image to be observed, in use, on the view side, and a good adhesion of a layer to be applied on the view side, which layer seals the channels of the second kind. The fact is that, on the one hand, in the image to be formed in use, as observed in a direction parallel to the axial direction of the channels, the part of the control side visible through the foil material need not form part of the image, while, on the other hand, sufficient foil surface can be available on the view side for applying to this foil surface a layer sealing the channels of the second kind, after, naturally, an electrophoretic medium has been included in each channel of the second kind. In fact, as sufficient foil surface can be available on the view side, the layer sealing the channels of the second kind can sufficiently adhere to the foil surface with, for instance, glue. This minimizes the risk of withdrawal of this layer, so that the risk of the electrophoretic medium of the second kind flowing away is also small. Furthermore, this offers the additional advantage that, also on the control side, relatively much foil surface can be available for applying the layer sealing the channels of the first kind.

A yet more detailed embodiment of the system according to the invention is characterized in that in each channel of the second kind at least one electrophoretic medium of a second kind is included, a visual exterior of the electrophoretic medium of the second kind being dependent on an electric field applied over the electrophoretic medium of the second kind, a visual exterior of the electrophoretic medium of the second kind being different from a visual exterior of the electrophoretic medium of the first kind.

This offers the advantage that, in use, the images to be formed with the aid of a system according to this embodiment, can comprise more than one color, and, if so desired, even combinations of colors in the image to be formed can be observed from a distance. Additionally, such an embodiment offers an advantage when introducing the electrophoretic medium of the first kind into the channel of the first kind and the electrophoretic medium of the second kind into the channels of the second kind. This need not take place selectively with expensive and complicated equipment, but can, instead, be done in a simple and inexpensive manner by filling all channels ending up on the view side, in this case the channels of the first kind, in one step with the electrophoretic medium of the first kind, and all channels ending up on the control side, the channels of the second kind, in a different step with the electrophoretic medium of the second kind.

A yet more advantageous embodiment of the system according to the invention is characterized in that the channels of the first kind and/or the channels of the second kind are substantially conical.

This offers the advantage that the channels of the first and/or the second kind can be surrounded by more foil material, without, in the image to be formed in use, and viewed in a direction parallel to the axial direction of the channels, parts of the system visible through the foil material and located on the control side forming part of the image. As the channels of the first and/or the second kind can be surrounded by more foil material, the strength and the rigidity of the foil is greater than the strength and the rigidity of the foil which can offer an image quality comparable in this respect, but whose channel walls closed in themselves are parallel to the axial direction of the channels.

A further special embodiment of the system according to the invention is characterized in that at least one of the sealing layers is provided with projecting parts, which are positioned and designed such that in each channel sealed by the layer a projecting part is fittingly received and the electrophoretic medium in such a channel is enclosed between the foil material and the projecting part.

This offers the advantage that a glue to be possibly used can be applied to the sealing layer in a selective manner such that there is hardly any glue available on the projecting part prior to the sealing layer being applied to the foil surface. The electrophoretic medium partly enclosed by the sealing part is therefore not mixed and clouded with glue.

The invention will now be elucidated with reference to a drawing. In the drawing:
Fig. 1 schematically shows a cross section of a first embodiment of the system according to the invention;
Fig. 2 schematically shows a cross section of a second embodiment of a system according to the invention; and
Fig. 3 schematically shows a cross section of a third embodiment of a system according to the invention.

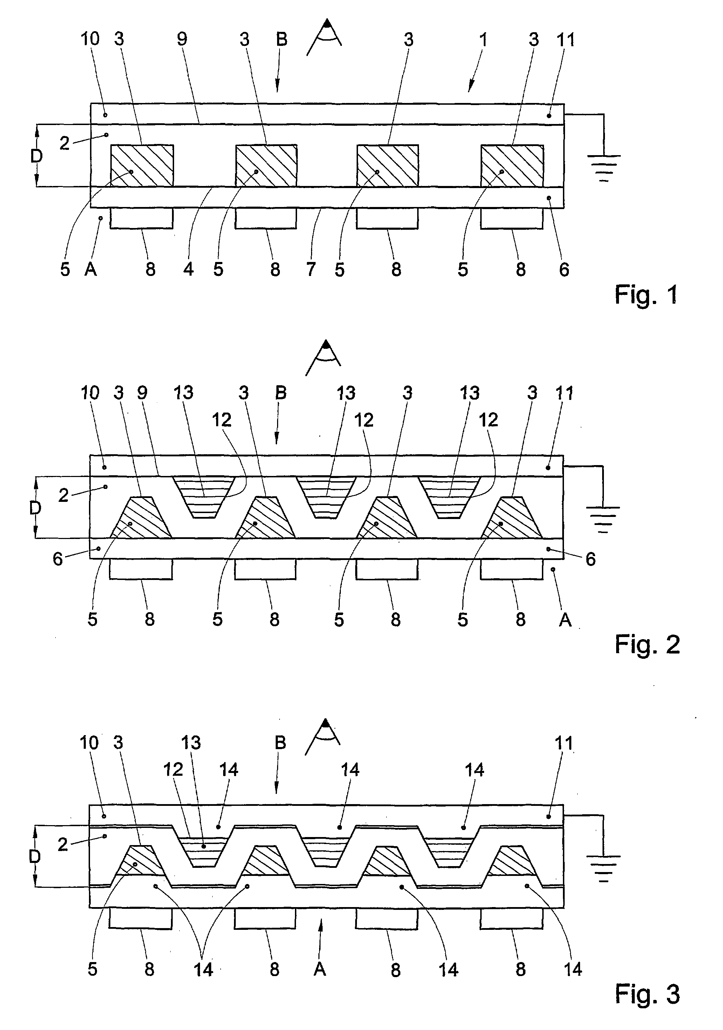

In Fig. 1 is schematically shown a cross section of an imaging system 1, comprising a foil 2, which is manufactured from an electrically insulating and optically transparent foil material. The foil layer 2 is provided with a plurality of channels of a first kind 3. Each channel of the first kind 3 extends from a foil surface 4 located on a control side A of the system over a part of the thickness D of the foil. This control side A of the system lies opposite a view side B of the system 1. An axial direction of each channel of the first kind 3 is substantially perpendicular to the foil surface 4. In each channel of the first kind 3, an electrophoretic medium of a first kind 5 is included. A visual exterior of the electrophoretic medium of the first kind 5 is dependent on an electric field applied over the electrophoretic medium of the first kind 5. On its foil surface located on the control side A of the system the foil is provided with a sealing layer 6, sealing each channel of the first kind 3. The sealing layer 6 can, for instance, be glued to the foil surface 4 located on the control side. Further, on the surface 7 of the sealing layer 6 located on the control side A of the system, individual electrodes 8 are provided. On the entire foil surface 9 of the foil located on the view side B of the system, a foil-shaped and transparent layer 10 is applied. In this example, this layer 10 also functions as electrode 11. By means of the electrodes 8, 11, located on both sides of the foil layer, an individual electric field can, in use, be applied over each channel of the first kind to form an image observable from the view side. The layers 6, 10, applied on both sides of the foil, can, as is indicated, be glued, but it is also conceivable that the layers are held against the foil by means of clamping. The layer 6, located on the view side, has to be transparent, but need not be colorless. The layer located on the control side is preferably optically non-transparent to ensure that, in use, observation of the image to be formed on the view side is not disturbed by the visibility of the electrodes located on the control side and other regulating means (not shown). In an embodiment as shown in Fig. 1, the quality of the image to be formed in use is better as the amount of the foil material between the channels decreases to a minimum. The fact is that in that case, viewing in a direction parallel to the axial direction of the channels, a minimum of foil material is visible between the channels forming part of the image to be formed. On the other hand, this minimum will be limited by a minimum amount of foil surface 4, necessary on the control side, to which to apply the layer 6, by gluing and/or clamping.

In Fig. 2, a schematically shown cross section of a second embodiment of a system 1 according to the invention, the foil 2 is provided with a plurality of channels of a first kind 3. Each channel of the first kind 3 extends from a foil surface 4, located at a control side, over a part of the thickness D of the foil. An axial direction of each channel of the first kind is substantially perpendicular to the foil surface 4. In each channel of the first kind 3, an electrophoretic medium of a first kind 5 is included. A visual exterior of the electrophoretic medium of the first kind 5 is dependent on an electric field applied over the electrophoretic medium of the first kind 5. The foil 2 is also provided with a plurality of channels of a second kind 12. Each channel of the second kind 12 extends from a foil surface 9, located on a view side, over a part of the thickness D of the foil 2. An axial direction of each channel of the second kind is substantially perpendicular to the foil surface 4, 9. In each channel of the second kind 12, an electrophoretic medium of a second kind 13 is incorporated. A visual exterior of the electrophoretic medium of the second kind 13 is dependent on an electric field applied over the electrophoretic medium of the second kind 13. Viewing in a direction parallel to the axial direction of the channels 3, 12, at least a minimal distance is available between at least a part of a channel wall, closed in itself, of each channel of the first kind 3 and at least a part of a channel wall, closed in itself, of each channel of the second kind 12. In other words, viewing in a direction parallel to the axial direction of the channels 3, 12, the channels 3, 12 may overlap, but not such that a channel wall, closed in itself, of a channel of the first kind 3 coincides in its entirety with a channel wall, closed in itself, of a channel of the second kind 12. A direct fluid communication between each channel of the first kind 3 and each channel of the second kind 12 is evidently excluded by the foil material of the foil 2 between the channels 3, 12. In each channel of the second kind 12, an electrophoretic medium of the second kind 13 is included. To the foil surface 9, located on the view side, a layer 10 is applied. This layer 10 is optically transparent and seals each channel of the second kind 12. Furthermore, this layer 10 is arranged to also function as electrode 11. To the foil surface located on the control side a layer 6 is applied. The layer 6 seals each channel of the first kind 3. The layer 10 can, for instance by gluing, adhere to the foil layer 2; in this embodiment, sufficient foil surface 9 can be available on the view side to have adhesion take place on it. The layer 6 can, likewise by gluing, adhere to the foil layer 2; in this embodiment, sufficient foil surface 4 can be available also on the view side to have adhesion take place on it. It is less obvious, but not inconceivable that, instead of or in addition to gluing, clamping is applied. A visual exterior of the electrophoretic system of the second kind 13 is also dependent on an electric field applied over the electrophoretic medium of the second kind 13, a visual exterior of the electrophoretic system of the second kind 13 being different from a visual exterior of the electrophoretic system of the first kind 5. This renders it possible that, in use, the images to be formed with the aid of a system 1 according to this embodiment contain more than one color. For instance, it is also possible that the first electrophoretic medium 5 can adopt a visual exterior that is either red or transparent, and the second electrophoretic medium 13 can adopt a visual exterior that is either green or transparent. The layer 10, sealing the channels of the first kind, can, for instance, have a blue color so that it is possible that these three adjacent channels can form combinations of the essential colors in an image to be observed from a distance. This increases the number of possible colors that can be observed from a distance in the image to be formed. In the embodiment shown in Fig. 2, the channels of the first kind 3 and the channels of the second kind 12 are each designed to be conical.

In Fig. 3 is schematically shown a cross section of a third embodiment of a system 1 according to the invention. In this embodiment, both the layer 10, located on the view side, and the layer 6, located on the control side, are provided with projecting parts 14, which are positioned and designed such that in each channel 3, 12, sealed by a layer 6, 10, a projecting part 14 is fittingly received. The electrophoretic medium 5, 13 in such a channel 3, 12, is, therefore, enclosed between the foil material of the foil 2 and the projecting part 14. When a glue to be optionally used is applied to a side to be glued of a layer 6, 10 to be applied, such that the projecting parts 14 are spared of glue before the layer, during manufacture, is applied to the respective foil surface 4, 9, the respective electrophoretic medium 5, 13 in the channels 3, 12, sealed by the respective layer 4, 9, will not be mixed and/or clouded by the glue.

Naturally, the system 1 can be provided with further regulating means (not shown) for regulating, in each channel 3, 12, a visual exterior of the electrophoretic medium 5, 12.

In a known manner, the channels 3, 12 can be provided in the foil 2, for instance by means of selective etching. With the aid of a similar method, the layer 6, 10 can be provided with the projecting parts 14. In this case, evidently, a part of the layer is selectively etched away in such a manner that the projecting parts 14 remain on a layer which, after etching, is somewhat thinner than the layer before etching.

The invention is not in any way limited to the exemplary embodiments shown. For instance, in a variant not shown various foils 2, provided on one or both sides with blind channels, can be brought against each other. Between these foils 2, a transparent, channel-sealing layer can be applied, but the foils 2 can also be brought together such that they seal each other's blind channels. Also, the sealing foil surfaces can be provided with projecting parts at predetermined locations. The channels of the first kind and the channels of the second kind, and, optionally, channels of a third kind are preferably, viewing in a direction parallel to the axial direction of the channels, uniformly distributed. Apart from the cul-de-sac character, the shape of the channels 3, 12 can be determined freely.

The layer 6, located on the control side, sealing the channels of the first kind 3, can be designed to be unidirectionally electrically conductive in a direction substantially perpendicular to a surface of the sealing layer. Such a unidirectionally conductive layer is known from PCT NL 98/00341. This layer comprises channels, which are continuous, perpendicular to a surface of the layer, and filled with a conductive material. In this use, the distribution of the channels in this unidirectionally conductive layer is such that over each channel of the first kind 3, and if applicable, each channel of the second kind 12, a separate electric field can be applied. This unidirectionally conductive layer is also, albeit in a somewhat different design, commercially available.

All such variants are understood to fall within the scope of the invention.

## Claims

1. An imaging system (1), comprising a foil (2), which is manufactured from an electrically insulating foil material, the foil being provided with a plurality of channels (3) of a first kind which are substantially perpendicular to a foil surface, in each channel (3) of the first kind, at least one electrophoretic medium (5) of a first kind being included, a visual exterior of the electrophoretic medium (5) of the first kind being dependent on an electric field applied over the electrophoretic medium (5) of the first kind, **characterized in that** the foil material is optically transparent, each channel (3) of the first kind extending from a foil surface of the foil (4) located on a control side (A) of the system opposite a view side (B) over a part of the thickness of the foil in the direction of a foil surface (9) of the foil located on the view side (B) of the system.

2. A system according to claim 1, **characterized in that** the foil is provided on the control side (A) with a sealing layer (6) sealing each channel (3) of the first kind.

3. A system according to claim 2, **characterized in that** the sealing layer (6) is optically non-transparent.

4. A system according to claim 2 or 3, **characterized in that** the sealing layer (6) is designed to be unidirectionally electrically conductive in a direction substantially perpendicular to a surface of the sealing layer.

5. A system according to any one of the preceding claims, **characterized in that** the foil (6) is further provided with a plurality of channels (12) of a second kind, each channel (12) of the second kind extending from the foil surface (9) of the foil located on the view side of the system over a part of the thickness of the foil in the direction of the foil surface of the foil located on the control side (A) of the system, the channels of the first (3) and the second (12) kind being distributed in the foil layer such that, viewing in a direction parallel to the axial direction of the channels, at least a minimum distance is available between at least a part of the channel wall, closed in itself, of each channel of the first (3) kind and at least a part of channel wall, closed in itself, of each channel (12) of the second kind, a direct fluid communication between each channel of the first kind and each channel of the second kind being excluded.

6. A system according to claim 5, **characterized in that** in each channel (12) of the second kind an electrophoretic medium (13) of a second kind is included, a visual exterior of the electrophoretic medium (13) of the second kind being dependent on an electric field applied over the electrophoretic medium (13) of the second kind, a visual exterior of the electrophoretic medium (13) of the second kind being different from a visual exterior of the electrophoretic medium (5) of the first kind.

7. A system according to claim 6, **characterized in that** the foil is provided on the view side (B) with an optically transparent sealing layer (4).

8. A system according to claim 7, **characterized in that** the sealing layer with which the system is provided on the view side comprises an electrode.

9. A system according to claim 7 or 8, **characterized in that** the sealing layer (11) with which the foil is provided on the view side (B) seals each channel of the second kind.

10. A system according to any one of the preceding claims, **characterized in that** the channels of the first kind (3) and/or the channels of the second kind (12) are substantially conical.

11. A system according to any one of claims 2 - 10, **characterized in that** at least one of the sealing layers (6, 11) is provided with projecting parts, which are positioned and designed such that in each channel sealed by the layer a projecting part is fittingly received and the electrophoretic medium in such a channel is enclosed between the foil material (2) and the projecting part.

12. A system according to any one of the preceding claims, wherein the system is further provided with regulating means (8) for regulating in each channel a visual exterior of the first or the second, or optionally the third electrophoretic medium.

## Patentansprüche

1. Bilderzeugungssystem (1) mit einer Folie (2), die aus einem elektrisch isolierenden Folienmaterial hergestellt ist, wobei die Folie mit mehreren Kanälen (3) eines ersten Typs versehen ist, die im wesentlichen rechtwinklig zu einer Folienoberfläche verlaufen, wobei in jedem Kanal (3) des ersten Typs mindestens ein elektrophoretisches Medium (5) eines ersten Typs angeordnet ist, wobei ein visueller Außenbereich des elektrophoretischen Mediums (5) des ersten Typs abhängig von einem elektrischen Feld ist, das auf das elektrophoretische Medium (5) des ersten Typs aufgebracht wird,
**dadurch gekennzeichnet, dass** das Folienmaterial optisch durchlässig ist, und dass sich jeder Kanal (3) des ersten Typs von einer Folienoberfläche (4) der Folie, die an einer einer Betrachtungsseite (B) gegenüberliegenden Steuerseite (A) des Systems angeordnet ist, über einen Teil der Dicke der Folie in der Richtung einer Folienoberfläche (9) der Folie erstreckt, die an der Betrachtungsseite (B) des Systems angeordnet ist.

2. System nach Anspruch 1, **dadurch gekennzeichnet, dass** die Folie an der Steuerseite (A) mit einer Dichtschicht (6) versehen ist, die jeden Kanal (3) des ersten Typs abdichtet.

3. System nach Anspruch 2, **dadurch gekennzeichnet, dass** die Dichtschicht (6) optisch undurchlässig ist.

4. System nach Anspruch 2 oder 3, **dadurch gekennzeichnet, dass** die Dichtschicht (6) derart ausgebildet ist, dass sie in einer Richtung, die im wesentlichen rechtwinklig zu einer Oberfläche der Dichtschicht verläuft, unidirektional elektrisch leitend ist.

5. System nach einem der vorhergehenden Ansprüche, **dadurch gekennzeichnet, dass** die Folie (6) ferner mit mehreren Kanälen (12) eines zweiten Typs versehen ist, wobei sich jeder Kanal (12) des zweiten Typs von einer Folienoberfläche (9) der Folie, die an der Betrachtungsseite des Systems angeordnet ist, über einen Teil der Dicke der Folie in der Richtung der Folienoberfläche der Folie erstreckt, die an der Steuerseite (A) des Systems angeordnet ist, wobei die Kanäle des ersten (3) und des zweiten (12) Typs derart in der Folienoberfläche verteilt sind, dass bei Betrachtung in einer parallel zur Axialrichtung der Kanäle verlaufenden Richtung mindestens ein Minimalabstand zwischen mindestens einem in sich geschlossenen Teil der Kanalwand jedes Kanals des ersten (3) Typs und mindestens einem in sich geschlossenen Teil der Kanalwand jedes Kanals (12) des zweiten Typs verfügbar ist, wobei eine direkte Fluidverbindung zwischen jedem Kanal des ersten Typs und jedem Kanal des zweiten Typs ausgeschlossen ist.

6. System nach Anspruch 5, **dadurch gekennzeichnet, dass** in jedem Kanal (12) des zweiten Typs ein elektrophoretisches Medium (13) eines zweiten Typs angeordnet ist, wobei ein visueller Außenbereich des elektrophoretischen Mediums (13) des zweiten Typs abhängig von einem elektrischen Feld ist, das auf das elektrophoretische Medium (13) des zweiten Typs aufgebracht wird, wobei ein visueller Außenbereich des elektrophoretischen Mediums (13) des zweiten Typs sich von einem visuellen Außenbereich des elektrophoretischen Mediums (5) des ersten Typs unterscheidet.

7. System nach Anspruch 6, **dadurch gekennzeichnet, dass** die Folie auf der Betrachterseite (B) mit einer optisch durchlässigen Dichtschicht (11) versehen ist.

8. System nach Anspruch 7, **dadurch gekennzeichnet, dass** die Dichtschicht, mit der das System auf der Betrachterseite versehen ist, eine Elektrode aufweist.

9. System nach Anspruch 7 oder 8, **dadurch gekennzeichnet, dass** die Dichtschicht (11), mit der die Folie auf der Betrachterseite (B) versehen ist, jeden Kanal des zweiten Typs (12) abdichtet.

10. System nach einem der vorhergehenden Ansprüche, **dadurch gekennzeichnet, dass** die Kanäle des ersten Typs (3) und/oder die Kanäle des zweiten Typs (12) im wesentlichen konisch sind.

11. System nach einem der Ansprüche 2-10, **dadurch gekennzeichnet, dass** mindestens eine der Dichtschichten (6,11) mit vorstehenden Teilen versehen ist, die derart positioniert und ausgebildet sind, dass in jedem durch die Schicht abgedichteten Kanal ein vorstehender Teil passend aufgenommen ist und das in einem derartigen Kanal enthaltene elektrophoretische Medium zwischen dem Folienmaterial (2) und dem vorstehenden Teil eingeschlossen ist.

12. System nach einem der vorhergehenden Ansprüche, ferner versehen mit Regelvorrichtungen (8), um in jedem Kanal einen visuellen Außenbereich des ersten und des zweiten und optional des dritten elektrophoretischen Mediums zu regeln.

## Revendications

1. Système (1) de formation d'images, comprenant une feuille (2) qui est fabriquée en un matériau pour feuille électriquement isolant, la feuille étant dotée d'une pluralité de canaux (3) d'un premier type, qui sont sensiblement perpendiculaires à la surface de la feuille, dans chaque canal (3) du premier type, au moins un milieu électrophorétique (5) d'un premier type étant inclus, l'extérieur vislble du milieu électrophorétique (5) du premier type dépendant du champ électrlque appliqué sur le milieu électrophorétique (5) du premier type, **caractérisé en ce que** le matériau pour feuille est optiquement transparent, chaque canal (3) du premier type s'étendant de la surface de la feuille (4) placée du côté de commande (A) du système qui est opposé au côté de vision (B) sur une partie de l'épaisseur de la feuille dans la direction de la surface (9) de la feuille placée du côté de vision (B) du système.

2. Système selon la revendication 1, **caractérisé en ce que** la feuille est placée du côté de commande (A), une couche d'étanchéité (6) scellant chaque canal (3) du premier type.

3. Système selon la revendication 2, **caractérisé en ce que** la couche d'étanchéité (6) est optiquement non transparente.

4. Système selon la revendlcatlon 2 ou 3, **caractérisé en ce que** la couche d'étanchéité (6) est conçue de manière à être électriquement conductrice de façon unidirectionnelle dans une direction qui est sensiblement perpendiculaire à la surface de la couche d'étanchéité.

5. Système selon l'une quelconque des revendications précédentes, caractértsé en ce que la feuille (6) est en outre dotée d'une pluralité de canaux (12) d'un deuxième type, chaque canal (12) du deuxième type s'étendant de la surface (9) de la feuille se trouvant du côté de vision du système sur une partie de l'épaisseur de la feuille dans la direction de la surface de la feuille se trouvant du côté de commande (A) du système, les canaux du premier type (3) et du deuxième type (12) étant répartis dans la couche de feuille de façon que, lorsqu'on observe dans une direction qul est parallèle à la direction axiale des canaux, au moins une distance minimale est disponible entre au moins une partie de la parol de canal, fermée en elle-même, de chaque canal du premier type (3) et au moins une partie de la paroi de canal, fermée en elle-même, de chaque canal (12) du deuxième type, une communication de fluide directe entre chaque canal du premier type et chaque canal du deuxième type étant exclue.

6. Système selon la revendication 5, **caractérisé en ce que**, dans chaque canal (12) du deuxième type, un milieu électrophorétique (13) d'un deuxième type est indus, l'extérieur visible du milieu électrophorétlque (13) du deuxième type dépendant du champ électrique appliqué sur le milieu électrophorétique (13) du deuxième type, l'extérieur visible du milieu électrophorétique (13) du deuxième type étant différent de l'extérieur visible du milieu électrophorétique (5) du premier type.

7. Système selon la revendication 6, **caractérisé en ce que** la feuille est placée du côté de vision (B), avec une couche d'étanchéité optiquement transparente.

8. Système selon la revendication 7, **caractérisé en ce que** la couche d'étanchéité dont le système est doté du côté de vision comprend une électrode.

9. Système selon la revendication 7 ou 8, **caractérisé en ce que** la couche d'étanchéité (11) dont la feuille est dotée du côté de vision (B) scelle chaque canal du deuxième type (12).

10. Système selon l'une quelconque des revendications précédentes, **caractérisé en ce que** les canaux du premier type (3) et, ou bien, les canaux du deuxième type (12) sont sensiblement coniques.

11. Système selon l'une quelconque des revendications 2 à 10, **caractérisé en ce qu'**au moins une des couches d'étanchéité (6, 11) est dotée de parties saillantes, qui sont positionnées et conçues de façon que, dans chaque canal scellé par la couche, une partie saillante soit reçue de manière ajustée et le milieu électrophorétique se trouvant dans ce canal soit enfermé entre le matériau de feuille (2) et la partie sailiante.

12. Système selon l'une quelconque des revendications précédentes, où le système est en outre doté d'un moyen de régulation (8) servant à réguler, dans chaque canal, l'extérieur visible du premier milieu électrophorétique ou du deuxième mllieu électrophorétique, ou bien, facultativement, du troisième milieu électrophorétique.
